# EUROPEAN PATENT APPLICATION

(11) **EP 4 768 820 A1**
(43) Date of publication of application: **01.07.2026**
(21) Application number: 23950434.3
(22) Date of filing: 30.10.2023
(51) Int. Cl.: F24S 20/30, F24S 23/30, F24S 70/65

(54) **SOLAR REACTOR**

(30) Priority: 25.08.2023 CN 202311081597
(71) Applicant: Institute Of Engineering Thermophysics, Chinese Academy Of Sciences, Beijing 100190 (CN)
(72) Inventor: HAO, Yong, Beijing 100190 (CN); TIAN, Zhenyu, Beijing 100190 (CN); LOU, Jiahui, Beijing 100190 (CN)
(74) Representative: Ström & Gulliksson AB
(86) International application number: PCT/CN2023/127730
(87) International publication number: WO 2025/043861

(57) **Abstract**

Provided is a solar reactor, including: a main body, a reaction chamber is defined in the main body, the main body includes a light transmission port for accommodate incident light entering the reaction chamber, the incident light is formed by light converged from outside of the reaction chamber, the incident light is diverged in the reaction chamber to form divergent light diverging in the reaction chamber; and a solid component provided in the reaction chamber, where the solid component includes a protrusion portion protruding toward a middle of the reaction chamber, at least part of a light facing surface of the protrusion portion facing the divergent light forms a non 90° angle with a projection direction of the divergent light, so that the divergent light extends along a thickness direction of the solid component. The solid component is made of a material used as oxygen carrier or catalyst in chemical reactions using solar energy as a heat source.

## Description

### CROSS REFERENCE TO RELATED APPLICATION

This application claims priority to Chinese Patent Application No. 202311081597.2, filed on August 25, 2023, entitled "SOLAR REACTOR", the entire content of which is incorporated herein in its entirety by reference.

### TECHNICAL FIELD

The present disclosure relates to the field of solar energy utilization technology, and in particular, to a solar reactor.

### BACKGROUND

The solar energy may be applied in fields such as thermochemical conversion. For example, the solar energy may be used as a heat source for thermochemical reactions involving gas-solid or liquid-solid phases. Solar reactors are widely used in oxidation/reduction reactions or catalytic reactions using the solar energy as the heat source.

A solar reactor currently used mainly includes a main body and a solid component provided in the main body. The main body includes a shell and a heat insulating material provided in the shell, and the main body is used as a reaction vessel. The solid component is made of an oxygen carrier or a catalyst so as to meet requirements of different types of chemical reactions, such as providing a reaction site for thermochemical reactions. An effective transfer of high temperature thermal energy of the solar energy is a prerequisite for an effective conduct of these two types of thermochemical reactions. However, directional characteristics of sunlight propagation greatly limits the effective transfer of the concentrated solar energy to the reaction site provided by the solid component.

Based on a material (such as a metal oxide) of the solid component, the solid component generally has the characteristic of being opaque to light. During a thermochemical reaction process, the sunlight may only radiate on an inner surface of a layered-arranged solid component. Moreover, a poor thermal conductivity of the solid component further hinders the transfer of the heat energy in the solid component.

To address the aforementioned shortcomings, in the prior art, the solid component may be configured as a porous structure so as to allow the sunlight to irradiate to an inside of the solid component as much as possible in a depth direction of the solid component. However, with an increasing depth, an irradiation intensity of the sunlight may still be exponentially decreased. Therefore, it severely limits a total amount of materials used as catalysts or oxygen carriers that may effectively participate in the thermochemical reactions, affecting a production rate and/or energy conversion efficiency of products of the thermochemical reactions. Furthermore, the concentrated sunlight entering the main body scatters in a direction substantially perpendicular to the inner surface of the solid component, which may easily lead to local heat spots on an irradiated portion of the solid component, resulting in uneven heating of an entire solid component and making the high-temperature portion of the solid component prone to melting, sublimating, and/or cracking.

Therefore, how to optimize a structure of the solid component in the solar reactor, solve the limitation of the solar thermal energy transfer caused by a directionality of the solar energy focusing and diverging processes, make the solar energy being more effectively transferred to a deep portion of the solid component material so as to significantly increase a proportion of materials effectively participating in the thermochemical reactions, and solve the uneven heating of the solid component at the same time, has become urgent technical problems to be solved for improving the conversion efficiency of the solar thermal chemical reactor.

### SUMMARY

An aspect of the present disclosure provides a solar reactor. In an aspect, a protrusion portion of the solid component has a larger surface area that may accept sunlight irradiation compared to the solid component with a layered structure in the prior art, and a density of solar energy flow per unit surface area of the solid component is reduced due to a vertical incidence direction changing to an inclined incidence direction, so that the reactor may accept a higher power solar energy input, thereby improving the solar energy collection efficiency of the reactor. In another aspect, since the divergent light may extend toward the depth direction of the reactor through adjacent protrusion portions, a total material amount of the solid component that may effectively participate in thermochemical reactions may be increased. In yet another aspect, since the protrusion portion forms a three-dimensional structure, the thermal energy on the surface of the solid component may also be transferred inward along various directions of the protrusion portion, which not only alleviates an attenuation of the solar energy along a depth direction of the solid component, but also balances local heating, thereby being conducive to reducing or even eliminating a formation of local heat spots.

The embodiments of the present disclosure provide a solar reactor, including: a main body, a reaction chamber is defined in the main body, the main body is provided with a light transmission port configured to accommodate an incident light entering the reaction chamber, the incident light is formed by light converged from an outside of the reaction chamber, and the incident light is diverged in the reaction chamber to form a divergent light diverging in the reaction chamber; and a solid component provided in the reaction chamber, the solid component is provided with a protrusion portion protruding toward a middle portion of the reaction chamber, at least a part of a light facing surface of the protrusion portion facing the divergent light forms a non 90° angle with a projection direction of the divergent light, so that the divergent light extends along a thickness direction of the solid component.

The solid component is made of a material used as an oxygen carrier or a catalyst in a chemical reaction, and a solar energy is used in the chemical reaction as a heat source.

According to the embodiments of the present disclosure, the solar reactor includes a plurality of solid components, and each of the plurality of solid components forms at least one protrusion portion; and the plurality of solid components are arranged radially on an inner surface of the main body, with a diverging point of the incident light diverging to form the divergent light as a center.

According to the embodiments of the present disclosure, the light facing surface of the solid component forms an inclined plane inclining from an upper portion to a lower portion, and an angle formed between the inclined plane and the projection direction of the divergent light includes an acute angle.

According to the embodiments of the present disclosure, a distance between upper portions of two adjacent solid components is greater than or equal to a distance between lower portions of the two adjacent solid components, so as to form a light passing region between the two adjacent solid components, and the light passing region gradually shrinks from a side close to the diverging point to the other side.

According to the embodiments of the present disclosure, the diverging point includes a focal point where the incident light converges, and the incident light freely diverges to form the divergent light through the diverging point.

According to the embodiments of the present disclosure, the solar reactor further includes: a diverging component provided on an optical path of the incident light in the light transmission port, the diverging component is configured to radially diverge the incident light toward an inside of the reaction chamber so as to form the divergent light.

According to the embodiments of the present disclosure, the solid component is a conical structure.

According to the embodiments of the present disclosure, the plurality of solid components are arranged in rows and/or columns on the inner surface of the main body.

According to the embodiments of the present disclosure, the plurality of solid components are arranged in a ring on the inner surface of the main body.

According to the embodiments of the present disclosure, the solid component is a porous structure.

According to the embodiments of the present disclosure, pore sizes of the porous structures of the solid component are substantially the same.

According to the embodiments of the present disclosure, pore sizes of the porous structures of the solid components gradually decrease from an outer side of the solid component to an inner side of the solid component.

According to the embodiments of the present disclosure, the solar reactor further includes: a reactant input mechanism configured to input a reactant into the reaction chamber; and a product output mechanism configured to output a product generated by the reactant from the reaction chamber. Each of the reactant and the product includes a gas or a liquid.

According to the embodiments of the present disclosure, the reactant input mechanism is connected to a side portion of the main body so as to be used as an input end of the reaction chamber.

According to the embodiments of the present disclosure, the product output mechanism is connected to a bottom portion of the main body so as to be used as an output end of the reaction chamber.

According to the embodiments of the present disclosure, the main body includes a shell and a heat insulating layer provided in the shell, and the reaction chamber is defined in the heat insulating layer.

According to the embodiments of the present disclosure, the reaction chamber includes a first mounting surface with a hemispherical concave surface, and the solid component is arranged on the first mounting surface.

According to the embodiments of the present disclosure, the reaction chamber includes a second mounting surface unfolding along a plane, and the solid component is arranged on the second mounting surface.

According to the embodiments of the present disclosure, the main body includes a base body having an opening and a cover body at the opening of the base body, and a middle of the cover body is provided with the above-mentioned light transmitting port.

According to the solar reactor provided in the present disclosure, the reaction chamber is defined in the main body, and the light transmission port provided on the main body is used to introduce the converged incident light into the reaction chamber. In an aspect, the protrusion portion of the solid component has a larger surface area that may accept the sunlight irradiation compared to the solid component with a layered structure in the prior art, and a density of the solar energy flow per unit surface area of the solid component is reduced due to the vertical incidence direction changing to the inclined incidence direction, so that the reactor may accept a higher power solar energy input, thereby improving the solar energy collection efficiency of the reactor. In another aspect, since the divergent light may extend toward the depth direction of the reactor through adjacent protrusion portions, the total material amount of the solid component that may effectively participate in thermochemical reactions may be increased. In yet another aspect, since the protrusion portion forms the three-dimensional structure, the thermal energy on the surface of the solid component may also be transferred inward along various directions of the protrusion portion, which not only alleviates the attenuation of the solar energy along the depth direction of the solid component, but also balances local heating, thereby being conducive to reducing or even eliminating the formation of local heat spots.

### BRIEF DESCRIPTION OF THE DRAWINGS

FIG. 1 is a cross-sectional view of a solar reactor according to an exemplary embodiment of the present disclosure;
FIG. 2 is a schematic diagram of a portion of a reaction chamber in the exemplary embodiment shown in FIG. 1;
FIG. 3 is a schematic diagram of a porosity in a case that a solid component of the solar reactor shown in FIG. 1 is made of a porous material;
FIG. 4 is an optical path diagram of a diverging component of the solar reactor in the exemplary embodiment shown in FIG. 1;
FIG. 5 is a solid component of the solar reactor in the exemplary embodiment shown in FIG. 1, where the solid component is a cone;
FIG. 6 is another solid component of the solar reactor in the exemplary embodiment shown in FIG. 1, where the solid component is a pyramid;
FIG. 7 is another solid component of the solar reactor in the exemplary embodiment shown in FIG. 1, where the solid component is a star-shaped cone;
FIG. 8 is another solid component of the solar reactor in the exemplary embodiment shown in FIG. 1, where the solid component is a curved cone;
FIG. 9 is another solid component of the solar reactor in the exemplary embodiment shown in FIG. 1, where the solid component is another curved cone;
FIG. 10 is another solid component of the solar reactor in the exemplary embodiment shown in FIG. 1, where the solid component is a ring-shaped cone;
FIG. 11 is another solid component of the solar reactor in the exemplary embodiment shown in FIG. 1, where the solid component is a strip-shaped cone.

In the drawings, the specific meanings of reference numerals are as follows:
1. Diverging point;
2. Main body;
21. Cover body;
211. Light transmission port;
22. Base body;
3. Solid component;
31. Light facing surface;
4. Divergent light;
5. Incident light;
6. Collection and controlling mechanism;
7. Reactant input mechanism;
8. Product output mechanism; and
9. Light source.

### DETAILED DESCRIPTION OF EMBODIMENTS

The embodiments of the present disclosure will be further explained below in conjunction with the accompanying drawings. The terms used here are only intended to describe specific embodiments and are not intended to limit the present disclosure. The terms "include", "comprise", etc. used here indicate an existence of features, steps, operations, and/or components, but do not exclude an existence or addition of one or more other features, steps, operations, or components.

All terms used here, unless otherwise defined, including technical and scientific terms, have the meanings commonly understood by those skilled in the art. It should be noted that the terms used here should be interpreted as having a meaning consistent with the context of the present disclosure, and should not be interpreted in an idealized or overly rigid manner.

In a case of using expressions such as "at least one of A, B, and C", it should generally be explained according to the meaning that those skilled in the art usually understand. For example, "a system having at least one of A, B, and C" should include but not be limited to a system having A alone, B alone, C alone, A and B, A and C, B and C, and/or A, B and C, etc. In a case of using expressions such as "at least one of A, B, or C", it should generally be explained according to the meaning that those skilled in the art usually understand. For example, "a system having at least one of A, B, or C" should include but not be limited to a system having A alone, B alone, C alone, A and B, A and C, B and C, and/or A, B and C, etc.

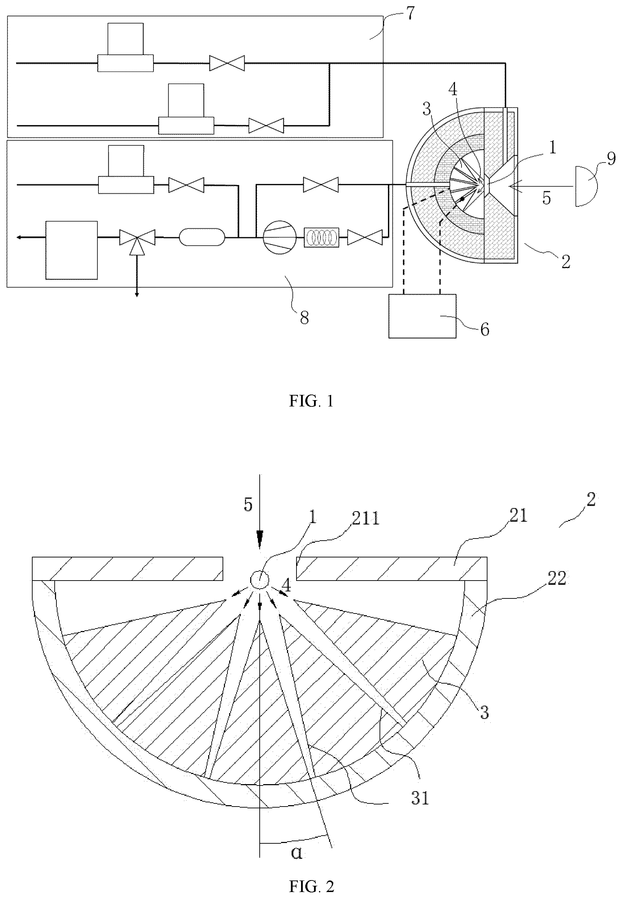

FIG. 1 is a cross-sectional view of a solar reactor according to a schematic embodiment of the present disclosure. FIG. 2 is a schematic diagram of a reaction chamber part in the schematic embodiment shown in FIG. 1.

As shown in FIG. 1 and FIG. 2, a solar reactor provided in the present disclosure includes a main body 2 and a solid component. A reaction chamber is defined in the main body 2, the main body 2 is provided with a light transmission port 211 used to accommodate incident light 5 entering the reaction chamber which is formed by light converged from an outside of the reaction chamber, and the incident light 5 is diverged in the reaction chamber to form divergent light 4 diverging in the reaction chamber. The solid component is provided in the reaction chamber, the solid component is provided with a protrusion portion protruding toward a middle portion of the reaction chamber, at least a part of a light facing surface 31 of the protrusion portion facing the divergent light 4 forms a non 90° angle with a projection direction of the divergent light, so that the divergent light 4 extends along a thickness direction of the solid component. The solid component is made of a material used as an oxygen carrier or a catalyst in a thermochemical reaction.

In this embodiment, the reaction chamber is defined in the main body, and the light transmission port provided on the main body is used to introduce the converged incident light into the reaction chamber. In an aspect, the protrusion portion formed by the solid component has a larger surface area that may accept sunlight irradiation compared to a solid component with a layered structure in the prior art; a density of a solar energy flow per unit surface area of the solid component is lowered, so that the reactor may accept a higher power solar energy input, thereby improving a solar energy collection efficiency of the reactor; in another aspect, since the divergent light may extend toward the depth direction of the reactor through adjacent protrusion portions, a total amount of materials of the solid component effectively participating in the thermochemical reactions may be increased; in yet another aspect, since the protrusion portion forms a three-dimensional structure, a thermal energy on a surface of the solid component may also be transferred inward along each direction of the protrusion portion, which not only alleviates an attenuation of the solar energy along the depth direction of the solid component, but also balances local heating, which is conducive to reducing or even eliminating a formation of local heat spots. Furthermore, the solid component provided with the protrusion portion may make better use of an internal space of the solar reactor, significantly increasing a total loading of the oxygen carrier or the catalyst, which is beneficial for effectively improving reaction products and the energy conversion efficiency.

Furthermore, based on the structure of the solar reactor, the solar reactor may be approximately regarded as a blackbody completely absorbing the incident sunlight, and a blackbody radiation is formed in the reaction chamber. In the prior art, the solar energy divergent light is vertically incident on the surface of the layered structure of the solid component, and an irradiation direction of the blackbody radiation formed inside the solar reactor on the surface of the solid component is the same as a direct irradiation direction of the divergent light and has a weaker intensity, also leading to a serious attenuation, which may not continue to enhance an energy transfer on a basis of the divergent light directly irradiating on the inner surface. Since a non 90° angle is formed between the protrusion portion and the projection direction of the divergent light, the intensity of the divergent light is greatly reduced, so that a primary irradiation effect of the divergent light on the light facing surface is similar to a secondary irradiation effect generated by the blackbody radiation. This allows the blackbody radiation to generate a beneficial supplement to the direct incidence of the divergent light, thereby improving the energy conversion efficiency of the solar energy based on the three-dimensional structure formed by the protrusion portion. It should be understood that the embodiments of the present disclosure are not limited to this.

For example, the above-mentioned solar reactor may further be used in a chemical reaction involving liquid-solid phases using the solar energy as a heat source.

Furthermore, the above-mentioned solar reactor is used to a chemical reaction including but not limited to: a thermochemical reaction (such as an oxidation/reduction reaction or catalytic reaction), a photocatalytic reaction, a photoelectrocatalytic reaction, or other chemical reactions using the solar energy as the heat source and providing the solid component as the oxygen carrier or the catalyst in the reaction vessel.

According to the embodiments of the present disclosure, as shown in FIG. 1 and FIG. 2, the solar reactor includes a plurality of solid components, and each of the plurality of solid components 3 forms at least one protrusion portion. The plurality of solid components 3 are arranged radially on an inner surface of the main body 2, with a diverging point 1 of the incident light 5 diverging to form the divergent light 4 as a center.

According to the embodiments of the present disclosure, as shown in FIG. 1 and FIG. 2, the light facing surface 31 of the solid component 3 forms an inclined plane inclining from an upper portion to a lower portion, and an angle formed between the inclined plane and the projection direction of the divergent light includes an acute angle.

According to the embodiments of the present disclosure, as shown in FIG. 1 and FIG. 2, a distance between upper portions of two adjacent solid components 3 is greater than or equal to a distance between lower portions of the two adjacent solid components 3, so as to form a light passing region between the two adjacent solid components 3, where the light passing region gradually shrinks from a side close to the diverging point 1 to the other side.

In an exemplary embodiment, as shown in FIG. 1, the solid component 3 is gradually enlarges from a side close to a diverging element (a side close to a middle portion of the main body 2 as shown in FIG. 1) to a side away from the diverging element (a side close to the inner surface of the main body 2 as shown in FIG. 1). Specifically, the solid component 3 includes but not be limited to a conical structure, a conical frustum structure, or other three-dimensional structures with a smaller upper portion and a larger lower portion.

For example, in the embodiment where the solid component 3 is a conical structure, the angle (i.e. α) formed between the light facing surface and the projection direction of the divergent light is an acute angle.

For another example, in the embodiment where the solid component 3 is a conical frustum structure, each of a top surface and a side surface of the conical frustum structure forms the light facing surface. An angle (i.e. α) formed between the top surface of the conical frustum structure and the projection direction of the divergent light is a right angle. An angle (i.e. α) formed between the side surface of the conical frustum structure and the projection direction of the divergent light is an acute angle.

In this embodiment, the solid component is a conical structure with a smaller upper portion and a larger lower portion as shown in FIG. 1. As a width of the lower portion of the solid component increases, an area of the light facing surface may be greatly increased, allowing the divergent light 4 to be more evenly and widely projected on the light facing surface, thereby increasing the effective materials participating in the thermochemical reactions.

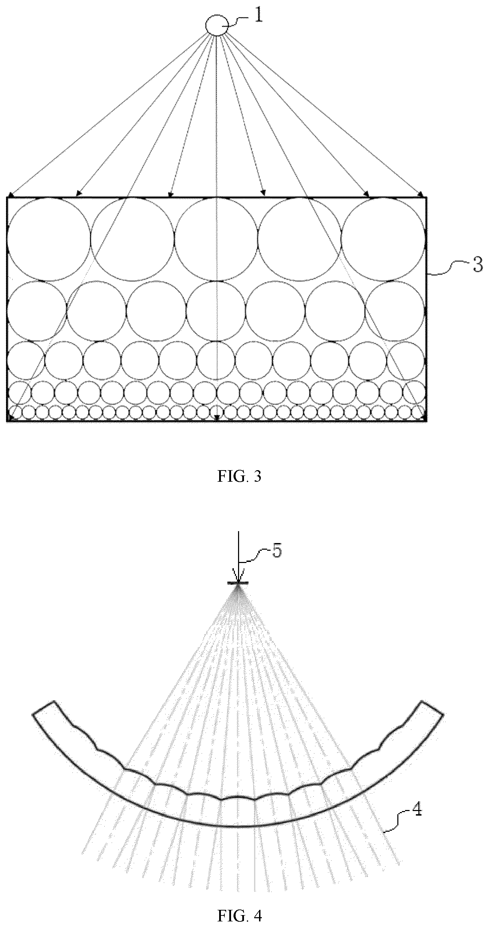

FIG. 3 is a schematic diagram of a porosity in a case that the solid component of the solar reactor shown in FIG. 1 is made of a porous material.

According to the embodiments of the present disclosure, as shown in FIG. 3, the solid component is a porous structure.

In an exemplary embodiment, the solid component includes, but is not limited to a material with a porous structure. Furthermore, a pore size of a porous structure includes but is not limited to at least one of a centimeter-level pore size, a millimeter-level pore size, or a micrometer-level pore size.

According to an embodiment of the present disclosure, as shown in FIG. 3, the pore sizes of the porous structure of the solid component gradually decrease from an outer side of the solid component to an inner side of the solid component.

In an exemplary embodiment, as shown in FIG. 3, the pore sizes of the porous structure of the solid component gradually decrease from the upper portion to the lower portion.

In this embodiment, the pore size of the porous structure located at the upper portion (i.e. a side of the solid component close to the light facing surface) of the solid component greater than the pore size of the porous structure located at the lower portion (i.e. a side of the solid component away from the light facing surface) of the solid component, which may make a transmittance of the upper portion of the solid component greater than a transmittance of the lower portion of the solid component, so that more sunlight may enter an inside of the solid component through the porous structure, further forming a bulk absorption of the heat energy, which is conducive to homogenizing a distribution of an energy flow density. It should be understood that the embodiments of the present disclosure are not limited to this.

In another exemplary embodiment, at least a portion of the solid component may be a non-porous solid structure; or an entire solid component is a solid structure.

According to another embodiment of the present disclosure, which is not shown in drawings, the pore sizes of the porous structure of the solid component are substantially the same.

According to the embodiments of the present disclosure, as shown in FIG. 1, the solar reactor further includes a reactant input mechanism 7 and a product output mechanism 8. The reactant input mechanism 7 is configured to input a reactant into the reaction chamber. The product output mechanism 8 is configured to output a product generated by the reactant from the reaction chamber. Each of the reactant and the product includes a gas or a liquid.

According to the embodiments of the present disclosure, as shown in FIG. 1, the reactant input mechanism 7 is connected to a side portion of the main body 2 so as to be used as an input end of the reaction chamber.

According to the embodiments of the present disclosure, as shown in FIG. 1, the product output mechanism 8 is connected to a bottom portion of the main body 2 so as to be used as an output end of the reaction chamber.

In an exemplary embodiment, as shown in FIG. 1, the reactant input mechanism 7 is provided on a radial side (the upper side shown in FIG. 1) of the main body 2 and is configured to introduce the reactant in the radial direction of the main body 2. Furthermore, the product output mechanism 8 is provided at the bottom portion (the left side shown in FIG. 1) of the main body 2 and is configured to discharge the product generated in the reaction chamber. Furthermore, the input end of the reaction chamber may be arranged close to the light transmission port 211, but the present disclosure is not limited to this. The outlet end of the reaction chamber may extend in the axial direction of the reaction chamber 211 and may be arranged in the middle of the bottom surface of the reaction chamber, but the present disclosure is not limited to this.

In an exemplary embodiment, based on the reaction carried out in the reactor, the solid component is made of a material used as the oxygen carrier or the catalyst. The material of the solid component includes, but is not limited to a metal oxide, a perovskite material, and other materials with catalytic effects in thermochemical reactions.

In an exemplary embodiment, the above-mentioned solar reactor is applied in thermochemical reactions in the oxidation/reduction reactions, where the solid component is used as the oxygen carrier. Specifically, the oxygen carrier is made of a material including but not limited to a cerium oxide material (used in the thermochemical reaction with a reaction temperature in a range of about 1500 °C to 1700 °C). It should be understood that the embodiments of the present disclosure are not limited to this.

For example, the solid component 3 may also be made of an oxide of at least one of Ni, Fe, Co, Cu, Rh, Ru, Ir, Pt, Pd, or others used as an oxygen carrier/oxide in the chemical reaction.

For another example, the solid component 3 may also be made of a perovskite material (used in the thermochemical reaction with the reaction temperature of about 1100 °C). The specific material used in the solid component 3 should meet the reaction temperature required for the thermochemical reaction.

In an exemplary embodiment, the reactant introduced by the reactant input mechanism 7 is water vapor. Furthermore, the product generated by the thermochemical reaction of water vapor in the reaction chamber includes but is not limited to hydrogen gas.

In another exemplary embodiment, the reactant introduced by the reactant input mechanism 7 is carbon dioxide. Furthermore, the product generated by the thermochemical reaction of carbon dioxide in the reaction chamber includes but is not limited to carbon monoxide.

In an exemplary embodiment, the reactant input mechanism 7 includes a first gas source storing the reactants (gas) and a second gas source storing inert gases. Furthermore, the reactant input mechanism 7 further includes a connecting mechanism (such as a pipeline, valve, flow controller, etc.) provided between the first gas source and the reaction chamber, as well as a connecting mechanism (such as a pipeline, valve, flow controller, etc.) between the second gas source and the reaction chamber.

In this embodiment, based on a thermal effect of the solar energy, the reaction chamber reaches a reaction temperature, and the solid component used as the oxygen carrier loses oxygen ions to generate oxygen gas. At this time, the second gas source is used to introduce the inert gas into the reaction chamber to discharge the oxygen gas generated by the oxygen carrier losing oxygen. After the oxygen gas is discharged, the first gas source is used to introduce the reactant into the reaction chamber, so that the reactant loses oxygen in the reaction chamber and forms the gaseous product.

In another exemplary embodiment, the above-mentioned solar reactor is applied in the thermochemical reaction of the catalytic reaction, where the solid component is used as the catalyst as well as an active site on which the product relies.

For example, the above-mentioned solar reactor may be applied in a methane catalytic reforming reaction, a methanol cracking reaction, or other thermochemical catalytic reactions.

In an exemplary embodiment, the product output mechanism 8 includes a vacuum pump used to form a negative pressure in the reaction chamber. This may further reduce an oxygen partial pressure in the reaction chamber and increase a non-stoichiometric oxygen loss of the oxygen carrier.

In an exemplary embodiment, the product output mechanism 8 further includes a mass spectrometry device used to detect the product. In this way, mass spectrometry detection may be performed on the product output by the product output mechanism 8 so as to analyze a composition of the product and/or the components of the product. It should be understood that the embodiments of the present disclosure are not limited to this.

In an exemplary embodiment, the reactant input mechanism 7 includes a plurality of sub-mechanisms for introducing different reactants. For example, in a water gas shift (WGS) reaction, the reactant input mechanism 7 may respectively introduce water and carbon monoxide (CO) into the reaction chamber. Furthermore, the product output mechanism 8 is used to discharge a mixed gas of hydrogen (H₂) and carbon dioxide (CO₂) formed by the water gas shift (WGS) reaction, and separate them in a subsequent process (such as using sodium hydroxide to absorb the carbon dioxide in the mixed gas) so as to collect the hydrogen (H₂). Based on the aforementioned water gas shift (WGS) reaction, the solid component is adaptively made of a catalyst, such as (Pt-Ptn)/α-MoC or any other solid catalyst used to catalyze the water gas shift (WGS) reaction.

In an exemplary embodiment, the solar reactor further includes a light source 9 used to output the sunlight or simulated sunlight into the reaction chamber, as well as a collection and controlling mechanism 6 used to collect temperature and/or pressure information in the reaction chamber. Specifically, the collection and controlling mechanism 6 is communicatively connected with the reactant input mechanism 7 and the product output mechanism 8. The collection and controlling mechanism 6 is used to collect a temperature and/or pressure situation in the reaction chamber, control the reactant input mechanism 7 to introduce the reactant or the inert gas into the reaction chamber, and control the product output mechanism 8 to extract the product formed after the reaction.

The light source 9 used for forming the simulated sunlight includes but is not limited to a solar simulator.

According to an exemplary embodiment of the present disclosure, the diverging point 1 includes a focal point where the incident light 5 converges, and the incident light 5 freely diverges to form the divergent light 4 through the diverging point 1.

In an exemplary embodiment, the incident light 5 includes a plurality of incident rays formed by reflecting and/or refracting the sunlight from the outside of the solar reactor by an optical element. Specifically, the plurality of incident rays converge at one point (i.e. the diverging point 1), so that the incident light 5 naturally diverges from the diverging point 1 to form the divergent light 4.

FIG. 4 is an optical path diagram of a diverging component of the solar reactor in the exemplary embodiment shown in FIG. 1.

According to another exemplary embodiment of the present disclosure, as shown in FIG. 4, the solar reactor further includes a diverging component. The diverging component is provided on an optical path of the incident light 5 in the light transmission port 211, and the diverging component is used to radially diverge the incident light 5 toward the inside of the reaction chamber so as to form the divergent light 4.

In an exemplary embodiment, as shown in FIG. 4, the diverging component includes but is not limited to an optical element formed by using a concave lens or a combination of concave and convex lenses. Specifically, the diverging component includes a wide-angle negative lens (including an aspherical concave lens) and a spherical lens (including an array formed by a plurality of small convex lenses) sequentially arranged along the optical path. Furthermore, the spherical lens is a concave bowl-shaped structure, and a plurality of convex lens structures that protrude upward are arranged radially on the inner surface (i.e. an upper surface shown in FIG. 4) of the spherical lens and surround a midpoint of the inner surface. The plurality of convex lens structures located at a same radial position form a convex lens array. A plurality of convex lens arrays surround the midpoint. An outer surface of the spherical lens (i.e. a lower surface as shown in FIG. 4) is a smooth curved surface structure.

In this embodiment, the wide-angle negative lens is configured to diverge the beam-shaped incident light 5, and the spherical lens is configured to further diffuse the light output by the wide-angle negative lens in a direction orthogonal to the outer surface of the spherical lens, so as to form the divergent light 4.

It should be noted that any optical element as well as a combination of optical elements in the art, which may make the beam-shaped incident light diverge radially outward along a center of a spherical surface, may be selected and applied. In addition, the diverging component may further include a convex lens for focusing light, which is located upstream of the optical path of the wide-angle negative lens, a filter (such as an infrared filter) for filtering, or other optical elements and their combinations.

In this embodiment, the incident light (including the converged sunlight or the simulated sunlight) may be radially diverged into the reaction chamber through the diverging component so as to increase a radiation range of the sunlight. In addition, by cooperating with the solid component, the divergent light may be diagonally irradiated on the light facing surface. Based on the above diverging component and the solid component, the light facing surface may extend in the depth direction of the reaction chamber. On one hand, the divergent light may be irradiated on the light facing surface at a deeper position of a shell so as to increase the effective materials participating in the thermochemical reactions. On the other hand, it may also avoid a formation of excessive energy flow density on a certain portion of the light facing surface, thereby improving the energy conversion efficiency of the solar reactor.

According to the embodiments of the present disclosure, as shown in FIG. 1 and FIG. 2, the solid component 3 is a conical structure.

According to the embodiments of the present disclosure, as shown in FIG. 1 and FIG. 2, the plurality of solid components 3 are arranged in rows and/orcolumns on the inner surface of the main body 2.

In an exemplary embodiment, as shown in FIG. 1, the solid component 3 is a regular conical structure (i.e., an extension direction of a generatrix of the solid component is substantially parallel to the projection direction of the divergent light). In this way, an upper surface of the solid component is completely exposed in the radiation range of divergent light, so that the entire upper surface of the solid component is used as the light facing surface.

In another exemplary embodiment which is not shown in the drawings, the solid component 3 is an oblique conical structure (i.e., an angle is formed between the extension direction of the generatrix of the solid component and the projection direction of the divergent light). A portion of the upper surface of each solid component exposed in the radiation range of divergent light is used as the light facing surface.

For example, a solid component 3 shown in FIG. 1 is divided into two symmetrical portions along a centerline thereof, and each of the two symmetrical portions is used as an independent solid component.

For another example, the generatrix of a solid component 3 shown in FIG. 1 is shifted to one side (such as the left side or the right side), so that in the cross-sectional view shown in FIG. 1, slopes of the solid component extending from a vertex to lower portions at two sides are different.

In this embodiment, by providing the solid component 3 as the regular conical structure, the solid component may have a large light facing surface under a same surface area occupied in the inner surface of the main body, effectively reducing the local energy flow on the light facing surface, avoiding the occurrence of local hot spots, making the energy distribution more uniform, and avoiding problems such as material melting, sublimating, and cracking.

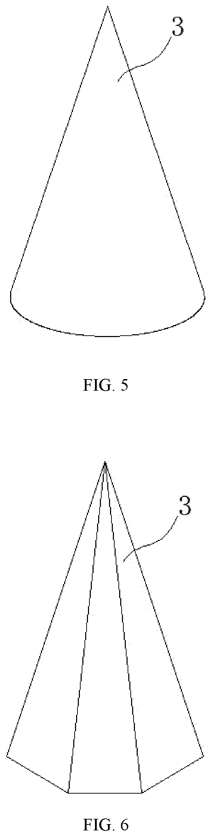

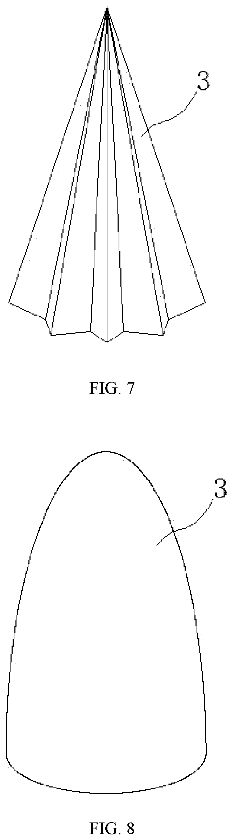

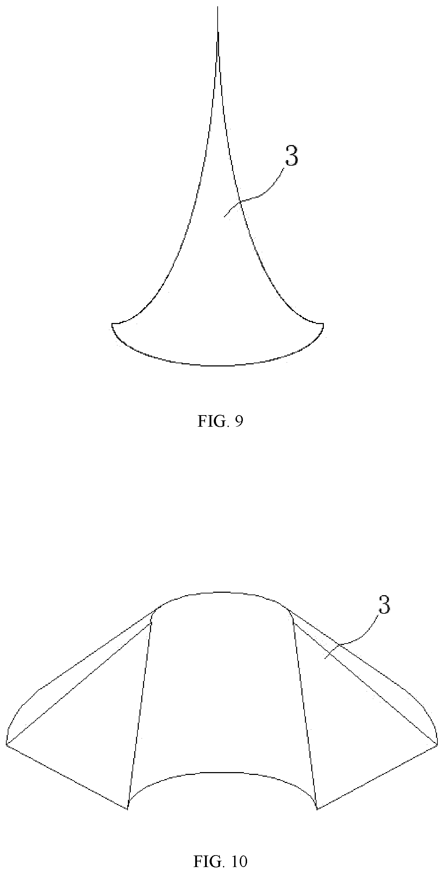

FIG. 5 is a solid component of the solar reactor in the exemplary embodiment shown in FIG. 1, where the solid component is a cone. FIG. 6 is another solid component of the solar reactor in the exemplary embodiment shown in FIG. 1, where the solid component is a pyramid. FIG. 7 is another solid component of the solar reactor in the exemplary embodiment shown in FIG. 1, where the solid component is a star-shaped cone. FIG. 8 is another solid component of the solar reactor in the exemplary embodiment shown in FIG. 1, where the solid component is a curved cone. FIG. 9 is another solid component of the solar reactor in the exemplary embodiment shown in FIG. 1, where the solid component is another curved cone.

In an exemplary embodiment, as shown in FIG. 5 to FIG. 9, the solid component 3 is a regular conical structure with the generatrix of the conical structure as the centerline. Specifically, the lower portions of the plurality of solid components 3 are mounted in rows and/or columns on the inner surface of the shell, and the upper portions of the plurality of solid components 3 extend toward the divergent light 4. Furthermore, the array of solid components formed by the solid components 3 in each row (in the left and right directions shown in FIG. 1) and/or in each column (in the directions facing and away from a paper surface shown in FIG. 1) may be arranged in a corresponding or staggered manner, so as to meet the requirement of arranging more solid components in the limited surface area of the shell 2.

FIG. 10 is another solid component of the solar reactor in the exemplary embodiment shown in FIG. 1, where the solid component is a ring-shaped cone.

According to the embodiments of the present disclosure, the plurality of solid components 3 are arranged in a ring form on the inner surface of the main body 2.

In an exemplary embodiment, as shown in FIG. 10, in an orthogonal projection along the vertical direction, the solid component 3 is a ring-shaped cone with a substantially ring mechanism at the bottom. Furthermore, the plurality of solid components are arranged around the centerline of the shell.

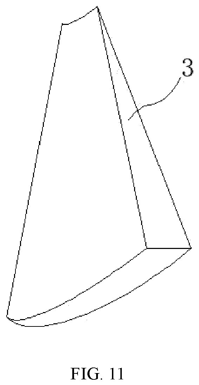

FIG. 11 is another solid component of the solar reactor in the exemplary embodiment shown in FIG. 1, where the solid component is a strip-shaped cone.

In an exemplary embodiment, as shown in FIG. 11, the solid component 3 is a strip-shaped cone that gradually enlarges from the upper portion to the lower portion. Specifically, in the orthogonal projection along the vertical direction, the plurality of solid components 3 are arranged around the centerline of the shell and extend radially outward along the radial direction of the reaction chamber so as to form a ring-shaped array of solid components 3. The plurality of arrays of solid components 3 are arranged around the centerline of the shell.

In this embodiment, the solid components are configured as different conical structures and are arranged according to the shape and size of the inner surface of the shell, so as to have a largest light facing surface to be heated under the thermal effect of the divergent light, resulting in a high amount of effective materials participating in the thermal chemical reactions in the solar reactor.

According to the embodiments of the present disclosure, which is not shown in drawings, the main body 2 includes a shell and a heat insulating layer provided in the shell, and the reaction chamber is defined in the heat insulating layer.

According to the embodiments of the present disclosure, as shown in FIG. 2, the reaction chamber includes a first mounting surface with a hemispherical concave surface, and the solid component is arranged on the first mounting surface.

In this embodiment, the first mounting surface with the hemispherical concave surface forms a hemispherical reaction chamber in the solar reactor. The inner surface of the reaction chamber is substantially orthogonal to the projection direction of the divergent light. Therefore, the solid components arranged on the first mounting surface may have the same shape and/or size, facilitating the processing of the solid components and the assembly with the reaction chamber. It should be understood that the embodiments of the present disclosure are not limited to this.

According to another embodiment of the present disclosure, which is not shown in the drawings, the reaction chamber includes a second mounting surface unfolding along a plane, and the solid component is arranged on the second mounting surface.

For example, the reaction chamber may be a cylindrical structure, a circular frustum structure, or other structures including the second mounting surface unfolding along the plane.

In this embodiment, the original one-dimensional (layered solid components laid flat on the second mounting surface and extending along the plane) surface structure (i.e., there is only one direction for the propagation of the solar energy, depending solely on the depth of the solar transmission) may formed a three-dimensional (i.e. protruding upward with respect to the original extended plane) bulk structure through the solid component, so as to form a bulk absorption of the heat energy, which is conducive to alleviating the attenuation of the solar radiation intensity from the surface to the depth in the inner portion of the solid component, and increasing the effective materials participating in the thermochemical reactions.

According to the embodiments of the present disclosure, as shown in FIG. 2, the main body 2 includes a base body 22 having an opening and a cover body 21 at the opening of the base body 22, and a middle portion of the cover body 21 is provided with the light transmission port 211.

In an exemplary embodiment, as shown in FIG. 2, the cover body 21 is a ring structure. Furthermore, the cover body 21 is mounted at the opening position of the upper portion of the base body 22.

In this embodiment, the cover body 21 and the base body 22 may be processed separately, which is conducive to reducing a manufacturing difficulty of the main body 2. In addition, the cover body 21 also has a certain thermal insulation effect, which is conducive to improving a heat gathering effect of the solar reactor. Furthermore, the cover body 21 may also block at least a part of the impact of other external light on the solar reactor. It should be understood that the embodiments of the present disclosure are not limited to this.

For example, in scenarios where the reaction temperature required for the thermochemical reactions is relatively low, the base body 22 without the cover body 21 may be used as the main body 2 of the solar reactor. Specifically, the opening of the base body 22 is used as the light transmission port for introducing the incident light 5.

It should be noted that, the directional terms mentioned in the embodiments, such as "upper", "lower", "front", "back", "left", "right", etc., are only for reference of directions in the accompanying drawings and are not intended to limit the scope of protection of the present disclosure. Throughout the accompanying drawings, the same elements are indicated by the same or similar reference numerals. When it may cause confusion in the understanding of the present disclosure, conventional structures or constructions may be omitted.

The embodiments of the present disclosure have been described above. However, these embodiments are for illustrative purposes only and are not intended to limit the scope of the present disclosure. Although various embodiments have been described separately above, this does not mean that the measures in the various embodiments may not be advantageously combined. The scope of the present disclosure is limited by the attached claims and their equivalents. Without departing from the scope of the present disclosure, those skilled in the art may make various substitutions and modifications, and the substitutions and modifications should fall within the scope of the present disclosure.

## Claims

1. A solar reactor, comprising:
a main body (2), wherein a reaction chamber is defined in the main body (2), the main body (2) is provided with a light transmission port (211) configured to accommodate an incident light (5) entering the reaction chamber, the incident light (5) is formed by light converged from an outside of the reaction chamber, and the incident light (5) is diverged in the reaction chamber to form a divergent light (4) diverging in the reaction chamber; and
a solid component provided in the reaction chamber, wherein the solid component is provided with a protrusion portion protruding toward a middle portion of the reaction chamber, at least a part of a light facing surface (31) of the protrusion portion facing the divergent light (4) forms a non 90° angle with a projection direction of the divergent light, so that the divergent light (4) extends along a thickness direction of the solid component,
wherein the solid component is made of a material used as an oxygen carrier or a catalyst in a chemical reaction, and a solar energy is used in the chemical reaction as a heat source.

2. The solar reactor according to claim 1, wherein the solar reactor comprises a plurality of solid components, and each of the plurality of solid components (3) forms at least one protrusion portion; and
wherein the plurality of solid components (3) are arranged radially on an inner surface of the main body (2), with a diverging point (1) of the incident light (5) diverging to form the divergent light (4) as a center.

3. The solar reactor according to claim 2, wherein the light facing surface (31) of the solid component (3) forms an inclined plane inclining from an upper portion to a lower portion, and an angle formed between the inclined plane and the projection direction of the divergent light comprises an acute angle.

4. The solar reactor according to claim 3, wherein a distance between upper portions of two adjacent solid components (3) is greater than or equal to a distance between lower portions of the two adjacent solid components (3), so as to form a light passing region between the two adjacent solid components (3), and the light passing region gradually shrinks from a side close to the diverging point (1) to the other side.

5. The solar reactor according to any one of claims 2 to 4, wherein the diverging point (1) comprises a focal point where the incident light (5) converges, and the incident light (5) freely diverges to form the divergent light (4) through the diverging point (1).

6. The solar reactor according to any one of claims 2 to 4, further comprising: a diverging component provided on an optical path of the incident light (5) in the light transmission port (211), wherein the diverging component is configured to radially diverge the incident light (5) toward an inside of the reaction chamber so as to form the divergent light (4).

7. The solar reactor according to any one of claims 2 to 4, wherein the solid component (3) is a conical structure.

8. The solar reactor according to claim 7, wherein the plurality of solid components (3) are arranged in rows and/or columns on the inner surface of the main body (2).

9. The solar reactor according to claim 7, wherein the plurality of solid components (3) are arranged in a ring on the inner surface of the main body (2).

10. The solar reactor according to any one of claims 1 to 4, wherein the solid component is a porous structure.

11. The solar reactor according to claim 10, wherein pore sizes of the porous structures of the solid component are substantially the same.

12. The solar reactor according to claim 10, wherein pore sizes of the porous structures of the solid components gradually decrease from an outer side of the solid component to an inner side of the solid component.

13. The solar reactor according to any one of claims 1 to 4, further comprising:
a reactant input mechanism (7) configured to input a reactant into the reaction chamber; and
a product output mechanism (8) configured to output a product generated by the reactant from the reaction chamber,
wherein each of the reactant and the product comprises a gas or a liquid.

14. The solar reactor according to claim 13, wherein the reactant input mechanism (7) is connected to a side portion of the main body (2) so as to be used as an input end of the reaction chamber.

15. The solar reactor according to claim 13, wherein the product output mechanism (8) is connected to a bottom portion of the main body (2) so as to be used as an output end of the reaction chamber.

16. The solar reactor according to claim 1, wherein the main body (2) comprises a shell and a heat insulating layer provided in the shell, and the reaction chamber is defined in the heat insulating layer.

17. The solar reactor according to claim 16, wherein the reaction chamber comprises a first mounting surface with a hemispherical concave surface, and the solid component is arranged on the first mounting surface.

18. The solar reactor according to claim 16, wherein the reaction chamber comprises a second mounting surface unfolding along a plane, and the solid component is arranged on the second mounting surface.
